Europäisches Patentamt

European Patent Office

Office européen des brevets

(19)

(11) Publication number: **0 090 407**
**A1**

(12) # EUROPEAN PATENT APPLICATION

(21) Application number: **83103090.3**

(22) Date of filing: **29.03.83**

(51) Int. Cl.³: **G 01 B 7/06**

(30) Priority: **29.03.82 US 363402**

(43) Date of publication of application: **05.10.83**
**Bulletin 83/40**

(84) Designated Contracting States: **AT BE CH DE FR GB IT LI LU NL SE**

(71) Applicant: **Magnaflux Corporation, 7300 West Lawrence Avenue, Chicago Illinois 60656 (US)**

(72) Inventor: **Gergin, Emile, 360 Central Park West, New York New York (US)**

(74) Representative: **Hoeger, Stellrecht & Partner, Uhlandstrasse 14c, D-7000 Stuttgart 1 (DE)**

(54) **Apparatus and methods for control in plating.**

(57) Methods and apparatus are disclosed for use in a plating operation, wherein a probe is provided including a test wire forming a base material having properties equivalent to those of an article to be plated, the wire being plated during plating of an article and the thickness of the plating on the wire being measured by measuring its resistance to indirectly measure the thickness of plating on the article being plated. Additional wires are provided for reference purposes with the electrical characteristics thereof being compared with those of the test wire.

- 1 -

## APPARATUS AND METHODS FOR CONTROL IN PLATING

This invention relates to apparatus and methods which are particularly designed for control in electroplating and electroless plating. The invention permits accurate monitoring of the plating rate and the thickness of a plating deposit during a plating operation to obtain uniform and accurate results with respect to plating thickness and quality. The apparatus and methods of the invention are such that they can be readily and economically applied and used and are also such that a high degree of operator skill is not required. They are also very versatile and are such as to be easily and quickly adjusted as required to obtain desired results in plating applications.

## BACKGROUND OF THE INVENTION

In the electroplating industry it has been possible to use eddy current, beta backscatter and magnetic methods to measure deposit thickness but only with the article or a portion thereof removed from the plating bath. In many cases, it has been possible to obtain generally satisfactory results but even with highly skilled operators and rigid quality control standards, very unsatisfactory results have sometimes occurred. Articles have been produced having deposits of insufficient thickness or which are otherwise unsatisfactory and in some cases, the thicknesses of deposits have been excessive, increasing the cost of production of the articles.  Moreover, the training and employment of
operators of adequate skill represents a substantial investment and operating expense and it has been difficult and
very expensive to obtain a rapidly increased production,
when such is desired.

## SUMMARY OF THE INVENTION

This invention was evolved with the general object
of providing apparatus and methods for improving and standardizing the results obtained in  plating operations while
at the same time reducing the skill required on the part of
an operator.  The term "plating" as used herein means electroplating and electroless or autocatalytic plating.

Another object of the invention is to provide
apparatus and methods which are useful in plating in which a
change in the composition of an article is produced durin;
processing and in which it would be desirable to monitor the
change so produced.

An important aspect of the invention is in the
recognition that many of the problems with plating processes
could be avoided if the deposit thickness could be accurately
measured while the plating is taking place, rather than
having to wait until a processing operation is completed.
Another important aspect of the invention is in the recognition that an apparent cause of the problem, which is the
inability to accurately measure the deposit thickness on an
article being plated, might be overcome without directly
measuring the change in composition.  In accordance with the

0090407

- 3 -

invention, the change in deposit thickness on an article is
indirectly measured by providing a probe which has platability
properties equivalent to those of an article being processed
and which is so designed that it can be processed at the
same time that an article is processed and while the change
in composition of the probe is measured.

In electroplating or electroless plating, the
article being plated is immersed in a liquid solution or
bath.  In accordance with the invention, a probe is provided which is adapted to be immersed in the bath and which
includes a base material having a surface portion for
contact with the bath, the base material having platability
properties equivalent to those of an article to be plated.
For control in an electroplating operation, conductor means
are provided for connection of the base material of the
probe to a source of potential to form a plating deposit on
the exposed surface portion of the probe in proportion to
the formation of a plating deposit on the article and the
thickness of the deposit of the probe is measured to indirectly measure the thickness of the deposit on the article.
In addition to or instead of indicating the thickness of the
deposit, the rate of change in thickness may be indicated.
For control in autocatalytic or electroless plating, the
same type cf probe is used without applying a plating
potential to the probe.

- 4 -

The thickness of the deposit and/or the rate of change of thickness may be continuously monitored and/or indicated and when a predetermined thickness is obtained, the electroplating operation may be automatically discontinued.

Important features of the invention relates to the construction of a probe in which the change in composition thereof is measured by measuring the electrical impedance thereof. In a probe for use in plating, an exposed metal surface portion is provided, preferably by using a length of an uncoated wire of relatively small diameter. The impedance of the wire may be readily measured by measuring the electrical resistance along its length. In this way, a very sensitive and accurate indication is obtained with respect to the thickness of a plating deposit.

Additional important features of the invention relate to the provision of means for minimizing the effects of varying ambient conditions, electrical noise and the like which might otherwise produce inaccurate indications. In a probe which uses an uncoated wire for measurement of the thickness of a plating deposit, the impedance or resistance of an uncoated or "active" wire is compared with that of a coated wire which is placed in close proximity to the active wire to be subjected to the same ambient conditions. In addition, a coated reference wire may be provided which has an electrical impedance equal to that of the active wire when uncoated and another coated reference wire may be provided which has an impedance equal to that of the active wire when a plating deposit of maximum thickness is formed

- 5 -

thereon.  The impedance of the active wire is compared with
the impedances of the reference wires to obtain an indication which accurately reflects the thickness of the plating
deposit and which is not affected by variations in temperature or ambient conditions.

Additional important features of the invention
relate to the provision of means for storing reference data
which is used in accurately correlating indicated measurements with the respective characteristics of an article
being plated and those of the probe and to the provision
of means for changing the reference data in accordance with
particular applications.  The reference data may preferably
include specific factors which can be readily placed in
storage for use in obtaining the desired indication.  For
example, the area of the surface portion of an article to be
plated and the current to be used in plating may be entered
into storage and used for developing an accurate indication
of the actual thickness of the plating deposit on the article
as well as an accurate indication of the plating rate.

With the invention, apparatus is provided which is
very versatile and readily adaptable for accurate monitoring
and control of plating operations under a wide variety of
conditions.

These and other objects, features and advantages
will become more fully apparent from the following detailed
description taken in conjunction with the accompanying
drawings.

- 6 -

## BRIEF DESCRIPTION OF THE DRAWINGS

FIGURE 1 is a perspective view illustrating monitoring and control apparatus constructed in accordance with the invention and shown in use in measuring plating thickness in an electroplating operation;

FIGURE 2 is an elevational view, partly in section, illustrating the construction of a probe of the monitoring and control apparatus shown in Figure 1; and

FIGURE 3 is a schematic electrical diagram illustrating circuitry of the monitoring and control apparatus of Figure 1.

## DESCRIPTION OF A PREFERRED EMBODIMENT

Reference numeral 10 generally designates monitoring and control apparatus constructed in accordance with the principles of the invention. As diagrammatically illustrated, the apparatus 10 is usable for monitoring and controlling an electroplating operation in which an article 11 to be plated and a suitable anode 12 are suspended from supports 13 and 14 in a bath 15 within a tank 16. The supports 13 and 14 are electrically connected through cables 17 and 18 to terminals 19 and 20 of a plating current supply unit 22. A shunt 23 is connected between the cable 17 and the terminal 19 for developing a current signal which may be applied to a terminal 24 of the unit 22 for control of current and to maintain the current at a constant value which may be adjusted by suitable adjustment means, not shown, associated with the unit 22. As also shown, the unit 22 may be connected through lines 25, 26 and 27 to a suitable voltage supply such as a three phase 60 hertz supply. The unit 22 may additionally include a control input terminal 28 to which a control signal may be applied for turning the unit 22 on and off in a manner as hereinafter described.

The illustrated monitoring and control apparatus 10 includes a probe 30 which is suspended from the support 13 and immersed in the bath 15 in proximity to the article 11 to be plated, the probe 30 being connected through a cable 31 to an instrument 32. In the illustrated arrangement, the instrument 32 is also connected through a conductor 33 to the support 14 for the anode 12 and it may also be connected through a line 34 to the control terminal 28 of the unit 22 and through lines 35 and 36 to the terminals 19 and 24, on opposite sides of the shunt 23.

The illustrated control unit 32 includes a digital display 38 on a front panel 39 and a keyboard unit 40, also mounted on the front panel 39. In addition, a start-stop button 41 may be provided on the front panel 39. The instrument 32 operating in conjunction with the probe 30 is arranged to monitor and control various facets of the plating operation.

In a typical operation, the operator, may use the keyboard 40 to enter in a number of numerical quantities and instructions relating to the plating operation. He may, for example, enter in a target value of the desired plating thickness in microinches, the plating current in amperes to be applied to the article being plated and the area of the surface to be plated, in square inches or other units. Having done so, he may wait for a predetermined indication on the display 38 which indicates that the instrument is ready for measurement. At this time, the operator may wish to perform various checking operations to make certain that the instrument is properly operating and calibrated, using the keyboard 40 to enter in selected control functions and observing the indications on the display 38.

Then the button 41 may be depressed to initiate a plating operation. The instrument 32 may then function to apply a control signal through the conductor 34 to the unit 22 to initiate a plating operation and when a pre-set target plating thickness value has been obtained, the unit 32 may function to supply a control signal through the conductor 34 to automatically discontinue the supply of plating current. The article 11 may then be withdrawn from the bath 15.

When the article plated is the first of a series of identical articles, the thickness of the deposit thereon may be measured in a conventional manner after it is withdrawn from the bath, using beta backscatter, eddy current or other instruments, for comparison of the thickness of the deposit with the target value entered into the instrument. If they do not exactly correspond, an appropriate adjustment may be made in the target value. Once it has been determined that the target value is reliable, the articles can be plated one after another without making any independent tests and a very high production rate can be obtained. At the same time, the plating thickness is accurately and reliably controlled and is not affected by changes in temperature, the composition of the bath and other variables.

- 9 -

At any time, the operator can use the instrument
32 to determine the rate of plating, in microinches per
minute or other units and he may also use the instrument 32
to check the efficiency of the bath 15 and to automatically
signal when the efficiency of the bath drops below a preset
level.  These and other functions of the apparatus will be
clarified after describing the construction and operation of
the probe 30 and the various specific functional operations
performed by the instrument 32.

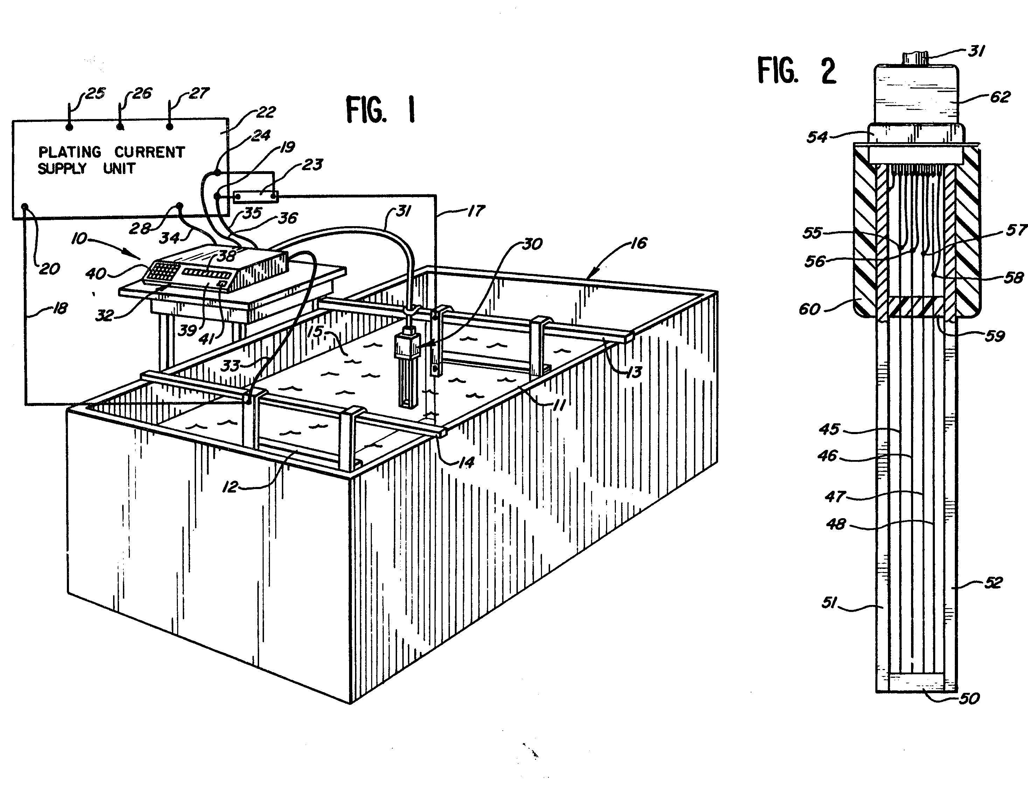

Figure 2 is an elevational view, partly in section,
illustrating the construction of the probe 30 which includes
four wires 45-48 in side-by-side parallel relation.  A lower
portion of the wire 47 is bare, in contact with the  plating
bath, and is supplied with current to form a deposit thereon
at the same time that current is applied to the article 11 to
form a deposit thereon.  The impedance of the wire 47 along
its length is measured to measure the thickness of the deposit
thus formed and to indirectly provide a measurement of the
thickness of the deposit formed on the article 11.

The wires 45, 46 and 48 are provided with coatings
of a suitable plastic material which protects them from contact with the bath.  As hereinafter explained, wire 45
operates as one leg of a bridge circuit used for measuring
the impedance of the wire 47 while wire 47 operates as the
other leg of the bridge circuit.  Wire 45 also operates in
a similar way for measurement of the impedance of the wires
46 and 48 which are provided for reference purposes and to
obtain a very accurate indication which is not affected by
the ambient temperature and other ambient conditions.

To support the wires 45-48, the lower ends thereof are secured to a short metal bar member 50 which is secured between the lower ends of a pair of elongated metal bar members 51 and 52 in parallel relation to the wires 45-48. A connector receptacle 54 is secured on the upper ends of the bars 51 and 52 and it includes four terminals connected to the upper ends of the wires 45-48. An additional four terminals are connected to taps 55-58 on the wires 45-48, respectively, and one additional terminal is connected to the bar 51 to provide a ground connection. As shown, the wires 45-48 extend through openings in a cross member 59 of insulating material and the upper portion of the assembly is surrounded by a housing 60 of insulating material. It is also noted that the metal bar members 50, 51 and 52 are coated with a suitable plastic insulating material so as not to be contacted by the plating bath.

A suitable connector plug 62 is connected to one end of the cable 31 and is inserted into the connector 54 to connect conductors of the cable 31 to the terminals of the connector 52.

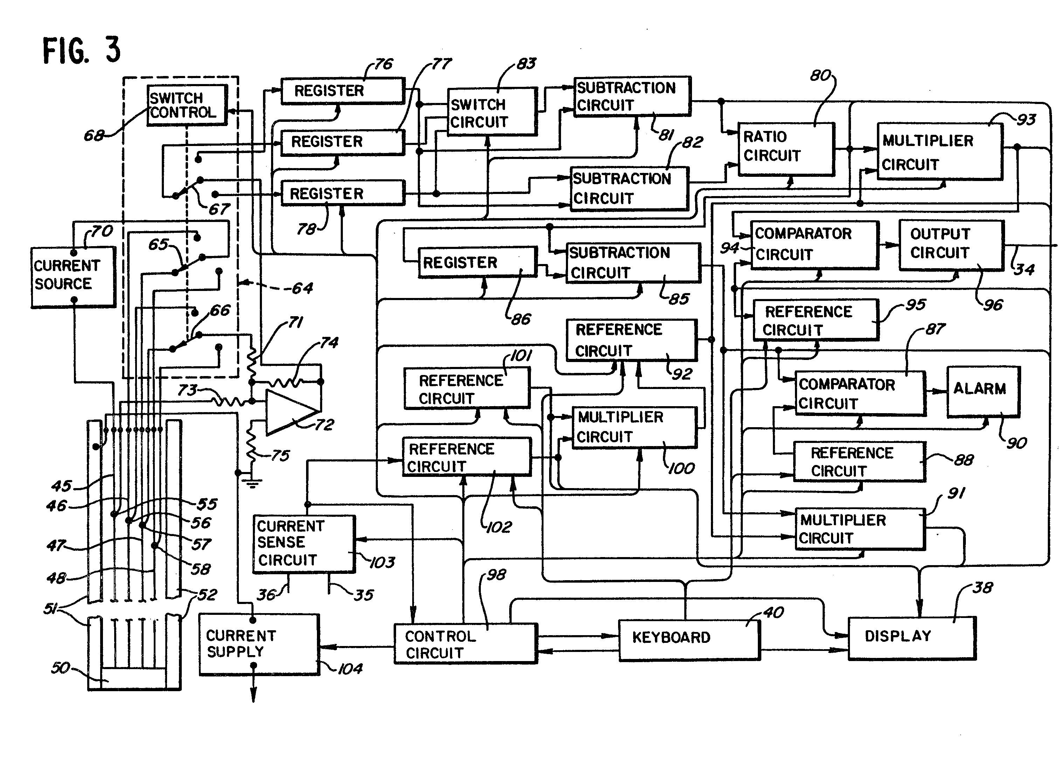

Figure 3 is a schematic diagram illustrating circuitry performing the functional operations of the instrument 32. It is noted that separate subtraction, multiplier, ratio, register, control, switching and other circuits are illustrated in block form and the operation of the instrument will be readily understood therefrom. A microprocessor has been used in a prototype to implement many of the functions of the separate circuits as illustrated and may be used in

- 11 -

manufactured instruments.  A microprocessor, of course, has
many advantages including the flexibility with which the
instrument can be adapted for various applications.

The terminals of the probe 30 are connected to
switching circuitry 64 which may preferably be implemented
through the use of solid state switching devices but which
is shown diagrammatically as including three rotating switch
contacts 65, 66 and 67 driven in synchronism by a switch
control 68.  The contact 65 is connected to one terminal of
a current source 70 and is engageable with fixed contacts
which are connected to the upper ends of the wires 46, 47
and 48.  The other terminal of the current source 70 is
connected to the upper end of the wire 45.  When, for
example, the contact 65 is connected to the upper end of the
wire 47, current flows from the source 70 down through the
wire 45 and back through the wire 47 to the opposite terminal
of the source 70.

Contact 66 is connected through a resistor 71 to
an input terminal of a comparator circuit 72 which input
terminal is also connected through a resistor 73 to the tap
55 on the wire 45 and through a resistor 74 to the output of
the comparator circuit 72.  The other input of the comparator
circuit 72 is connected through a resistor 75 to a circuit
ground which is connected through a conductor of the cable
31 to the metal bar members 51, 50 and 52 which form a frame
of the probe 30, the lower ends of the wires 45-48 being connected to the bar member 50.

- 12 -

Contact 66 is selectively engageable with fixed contacts which are connected to the taps 56, 57 and 58 on the wires 46, 47 and 48, respectively. A bridge measuring circuit is provided such that when, for example, the current-supply contact 65 is connected to the upper end of the wire 47 and when, at the same time, the measuring contact 66 is connected to the tap 57 on the wire 47, the comparator circuit 72 responds to the difference between the potentials developed at the taps 55 and 57.

The contact 67 is connected to the output of the comparator circuit 72 and is engageable with fixed contacts which are connected to three register circuits 76, 77 and 78. When, for example, the contact 65 is connected to the upper end of the wire 47 and when the contact 66 is connected to the tap 57 on the wire 47, the contact 67 is engaged with the fixed contact which is connected to the input of the register 77. Similarly, measurements from the taps 56 and 58 are applied to the registers 76 and 78. The operation of the switching circuitry 64 and the operation of the registers 76-78 is such that a digital number is stored in each register corresponding to the average of a large number of separate measurements made over a period of time with respect to the voltages developed at the respective taps 56, 57 and 58. As a result, an integrating action is obtained to balance and filter or cancel out high and medium frequency noise and other extraneous signals. It will be appreciated, of course, that other forms of filtering and integrating circuits may be used. Low frequency fluctuations and drift are filtered or canceled out through a comparison of the outputs of the registers 76-78 as hereinafter explained.

- 13 -

The wires 46 and 48 and the measurements of the voltages at the taps 56 and 58 thereof are for the purpose of detecting the effects of temperature variations, drifts and low frequency fluctuations which affect the uncoated or "active" wire 47 on which the deposit is formed. The taps 56 and 57 on the wires 46 and 47 are at relative positions such that when there is no plating deposit on the wire 47, the voltages produced at the taps 56 and 57 are equal. The tap 58 on the wire 48 is at a position such that with a plating deposit on the wire 47 having a maximum thickness for which the probe is designed, the voltages on the taps 57 and 58 are equal. Thus, the taps 56 and 58 on the wires 46 and 48, respectively, establish reference values for the low and high ends of the operating range. In the operation of the instrument, the voltage developed at the tap 57 of the active wire 47 at any given time is compared with the voltages developed at the taps 56 and 58 in a manner such as to compare the ratio of the difference in the voltages of taps 57 and 56 with the difference in the voltages of taps 58 and 56.

The taps 56-58 on the wires 46-48 are also positioned relative to the tap 55 on the reference wire 46 in a manner such as to insure a voltage offset such that a voltage of one polarity is always measured.

By way of example, and not by way of limitation, the registers 76 and 78 may register digital values of from 0 to 255. Under average conditions, the value registered in the register 76 from measurements at the tap 56 of the wire 46 may be 30 and the value registered in the register 78

- 14 -

from measurements at the tap 58 of the wire 48 may be 230. The value registered at the register 77 may vary from 30 with no deposit on the active wire 47 to 230 with a deposit of maximum thickness on the wire 47. The difference between the values registered in registers 77 and 76 is compared with the difference in the values registered in registers 78 and 76 to establish the thickness of the plating deposit as a ratio or percentage of the maximum plating deposit. Variations in temperature or the like which affect the active wire 47 will also affect the reference wires 46 and 48 to a proportionate extent and with the instrument, a measurement is obtained which is substantially independent of such variations.

To obtain a measurement of the ratio change, a ratio circuit 80 is provided which has inputs connected to the outputs of two subtraction circuits 81 and 82. One input of subtraction circuit 81 is normally connected through a switching circuit 83 to the output of the register 77 but, for circuit test operations, it may be connected, through the switch 83, either to the output of the register 76 or the output of the register 78. The other input of the subtraction circuit 81 is connected to the output of the register 76 and normally, the subtraction circuit 81 registers the difference between the value registered in register 77 and that registered in register 76.

The subtraction circuit 82 has one input connected to the register 78 and a second input connected to the register 76 and it produces an output corresponding to the differences between the values registered in the register 78

- 15 -

and 76. Thus, the ratio circuit 80 normally produces an output signal corresponding to the thickness of the plating deposit on the active wire 47 as a ratio or percentage of the maximum plating deposit for which the probe is designed.

The output of the ratio circuit 80 may be used as a direct indication of the thickness of the plating deposit and may be displayed on the display 38. By way of example, the number displayed may vary from 0 to 100. In addition, the output of the ratio circuit 80 may be applied to circuitry operative to develop a signal corresponding to the rate of change of the plating deposit thickness. In particular, the output of the ratio circuit 80 is applied to one input of a subtraction circuit 85 having a second input connected to the output of a register 86 which is connected to the output of a register circuit 86. The output of the subtraction circuit 85 is equal to the difference between the output of the ratio circuit 80 at a time in which a control signal is applied and the output of the circuit 80 at a prior time at which it was registered in the register 86. With control signals periodically applied at a certain rate, the output of the subtraction circuit 85 is proportional to the rate at which a plating deposit is developed on the active wire 47.

The output of the subtraction circuit 85 provides very important information in that it indicates whether the plating operation is proceeding satisfactorily and it also provides a direct indication of the efficiency of the plating bath. In the illustrated circuit, its output is supplied to a comparator circuit 87 for comparison with a signal from a
reference circuit 88, the comparator circuit 87 being operative to develop an output signal when the plating rate falls
below a value established by the reference signal. This
signal is applied to a suitable alarm device 90.

The output of the subtraction circuit 85 is also
applied to one input of a multiplier circuit 91 having a
second input connected to a reference circuit 92. The reference signal applied from circuit 92 may be such as to
develop an output of the multiplier circuit 91 in predetermined units such as, for example, microinches per minute.

The reference circuit 92 also supplies a corresponding reference to another multiplier circuit 93 which
has an input connected to the output of the ratio circuit 80
and which develops an output signal in predetermined units
such as microinches. The output of the multiplier circuit
93 may be registered on the display 38 and is also applied
to one input of a comparator circuit 94 having a second
input connected to a reference circuit 95. When the output
of the circuit 93 exceeds a value set by the reference
circuit 95, the comparator circuit 94 develops an output
which is applied to an output circuit 96 to apply a signal
through line 34 to terminate operation of the plating current
supply unit 22. Thus, the reference signal supplied from
the circuit 95 corresponds to the target value of plating
thickness to be developed on the article being plated.

- 17 -

The value supplied by the reference circuit 95 may be controlled through the keyboard 40 and through a control unit 98 which also supplies control signals to the various other circuits of the illustrated system, as shown. By way of example, a code signal may be entered through the keyboard 40 after which the desired plating thickness may be entered and caused to appear on the display 38, the displayed value being then entered through depression of an entry key of the keyboard 40.

Similarly, a reference value may be entered into the reference circuit 92 directly from the keyboard 40. Alternatively, a reference signal may be entered into the circuit 92 from a multiplier circuit 100 which reference signal is a function of the product of two reference values supplied from circuits 101 and 102. Circuit 101 may be supplied with a reference corresponding to the area to be plated, in square inches, square centimeters or other units. Circuit 102 may supply a signal corresponding to the plating current supplied to the article. Both values may be entered from the keyboard 40. Alternatively, the signal to circuit 102 may be supplied from the current measuring shunt 23 through a current sense circuit 103 controlled from the keyboard and control circuits 40 and 98.

As shown, the various circuits are controlled from the control circuit 98 which is controlled from the keyboard 40 and the outputs of many of the circuits are supplied to the display 38 so that under control from the keyboard 40, testing operations may be performed to insure that the circuits are properly operating. For example, the switch

- 18 -

circuit 83 may be operated from the control circuit 98 to connect the register 76 or the register 78 to the subtraction circuit 81 while displaying the output of the subtraction circuit 81 at the display.  While doing so, the temperature in the region of the probe 30 may be varied to test the tracking of the instrument.

All of the reference circuits are connected to the keyboard 40 for direct entry of reference data therein and all are also connected to the display for display of the reference values under control of the control circuit 98 and keyboard 40.

The control circuit 98 also controls a current supply 104 which is connected between circuit ground and the conductor 33 which is connected to the anode 12.  Circuit ground is connected through a conductor in the cable 31 to the metal bar members 51, 50 and 52 of the probe 30, the bar member 50 being connected to the lower end of the active wire 47.  Thus, the probe plating current flows from the current supply 104 through the conductor 33 from the anode 12 through the bath 15 to the wire 47 to develop the plating deposit thereon.

With the plating current supply unit 22 operating to supply a constant plating current for the article, the current supplied by the supply 104 should be constant.  If the plating for the article is subject to variations, the current supply 104 may be controlled to maintain a proportional current for the probe, through circuitry in the control circuit 98 which responds to the output of the current sensing circuit 103.

After the probe is used to monitor and control the build-up of a plating deposit on the surface portion of the article 11, the plating deposit formed on the active wire 47 of the probe may be removed, preferably by disposing the probe in a small container containing a solution and an electrode, a reverse current being applied between the electrode and the probe to remove the deposit. Alternatively, the probe may be so constructed that after formation of a deposit thereon, the active wire 47 may be removed and replaced by a bare wire having no deposit thereon. It will be understood that the invention is not limited to the illustrated probe construction or appearance and that the probe may take many different forms while still using the principles of the invention. For control in autocatalytic or electroless plating, no source of potential need be provided for the probe.

It will be understood that modifications and variations may be effected without departing from the spirit and scope of the novel concepts of this invention.

I CLAIM:

1. A nondestructive testing method for use in a plating operation performed on an article which includes a base material, comprising the steps of providing a probe including a base material which has plating properties equivalent to those of said base material of said article, processing said probe to produce a deposit thickness thereon proportional to the deposit thickness on said article, and measuring said deposit thickness on said probe to indirectly measure the deposit thickness on said article.

2. In a nondestructive testing method as defined in claim 1, wherein said plating operation includes contacting of said base material of said article with a liquid, and said processing of said probe including contacting of said base material of said probe with said liquid.

3. In a nondestructive testing method as defined in claim 2, wherein said base material of said article is immersed in said liquid, said base material of said probe being immersed in said liquid in proximity to said article to be processed under substantially the same conditions.

4. In a nondestructive testing method as defined in claim 1, said probe being plated simultaneously with the plating of said article.

5. In a nondestructive testing method as defined in claim 4, the further step of terminating the plating of said article when a predetermined plating thickness on said probe is measured.

- 21 -

6.  In a nondestructive testing method as defined in claim 4, the further step of measuring the time rate of plating of said probe to indirectly measure the time rate of plating of said article.

7.  In a nondestructive testing method as defined in claim 4, said probe being positioned in proximity to said article to be plated under conditions substantially like those in which said article is plated.

8.  In a nondestructive testing method as defined in claim 1, said probe being provided with a sensing portion having an electrical characteristic which is changed in proportion to a change in plating thickness thereon and in proportion to a change in said plating thickness on said article, and said electrical characteristic being measured to indirectly measure said change in plating thickness on said article.

9.  In a nondestructive testing method as defined in claim 8, said probe being provided with a reference portion which is protected from being plated and which has an electrical characteristic changed in proportion to ambient conditions which also affect said electrical characteristic of said sensing portion, said electrical characteristic of said reference portion being measured and balanced against said measured electrical characteristic of said sensing portion.

10. In a nondestructive testing method as defined in claim 1, wherein said plating operation is one in which said article and electrode means are immersed in an electrolyte and are connected to electric current source means to cause development of a plating deposit on a surface portion of said article, said probe being immersed in said electrolyte and being connected to said electric current source means to develop on a surface portion thereof a plating deposit having a thickness proportional to that formed on said surface portion of said article, the thickness of said plating deposit on said probe being measured to indirectly measure the thickness of said plating deposit on said article.

11. In a nondestructive testing method as defined in claim 10, said plating deposits on said article and said probe being formed simultaneously.

12. In a nondestructive testing method as defined in claim 10, the further step of measuring the time rate of change in thickness of said plating deposit on said probe.

13. A nondestructive testing device for use in a plating operation performed on an article which includes a base material, said device comprising: a probe having a base material which has plating properties equivalent to those of said base material of said article and which is plated at a rate proportional to the rate of plating of said article, and measuring means for measuring the deposit thickness on said probe to indirectly measure the deposit thickness on said article.

- 23 -

14. In a nondestructive testing device as defined in claim 13, said measuring means being arranged to develop an electrical signal having a magnitude proportional to a change in the deposit thickness on said probe.

15. In a nondestructive testing device as defined in claim 14, means for developing a control signal when said electrical signal reaches a predetermined magnitude, said control signal being useable for control of said plating operation.

16. In a nondestructive testing device as defined in claim 13, said deposit thickness on said probe being changed simultaneously with changes in the deposit thickness on said article, and means for measuring the time rate of change of said deposit thickness on said probe.

17. In a nondestructive testing device as defined in claim 13, for use in a plating operation in which said article and electrode means are immersed in an electrolyte and are connected to electric current source means to cause development of a plating deposit on a surface portion of said article, said probe including a sensing element having a surface portion adapted to be immersed in said electrolyte, and means for connecting said sensing element and said electrode means in circuit with said electric current source means to cause development of a plating deposit on said surface portion of said sensing element with a thickness proportional to that of said plating deposit on said surface portion of said article, said measuring means being arranged for measuring the thickness of said plating deposit on said sensing element.

18.   In a nondestructive testing device as defined in claim 17, said measuring means including means for measuring the electrical impedance presented by said sensing element with said plating deposit thereon.

19.   In a nondestructive testing device as defined in claim 18, said sensing element being in the form of an elongated wire-like element, and said measuring means comprising means for passing current longitudinally through said element, and means for measuring the ratio between the voltage between longitudinally spaced points of said element and the current therethrough.

20.   In a nondestructive testing device as defined in claim 13, means providing a reference portion protected from being coated and in proximity to a surface portion of said probe to be subjected to substantially the same ambient conditions, means for measuring the impedance of said reference portion, and means for comparing the measured impedances of said reference and surface portions.

21.   In a nondestructive testing device as defined in claim 13, said probe having first and second reference portions protected from being coated and in proximity to said surface portion of said probe to be subjected to substantially the same ambient conditions, said first reference portion having an impedance substantially the same as that of said surface portion of said probe when uncoated, said second reference portion having an impedance substantially the same as that of said surface portion of said probe when provided with a maximum coating thickness, and means for measuring the impedances of said first and said second reference portions and comparing the measured impedance with that of said surface portion.

22. In a device as defined in claim 21, means for measuring the ratio of the difference between the measured impedance of said surface portion and that of said first reference portion to the difference between the measured impedance of said second reference portion and that of said first reference portion.

23. In a nondestructive testing device as defined in claim 14, indicating means for developing an indication of the change in deposit thickness on said article in predetermined units, means for storing reference data corresponding to the ratio between the magnitude of said electrical signal developed by said measuring means and the magnitude of a signal required by said indicating means to develop an accurate indication of the change in deposit thickness on said article, and means for applying to said indicating means a signal proportional to the product of said stored reference data and the magnitude of said electrical signal developed by said measuring means.

24. In a nondestructive testing device as defined in claim 23, means for changing said stored reference data in accordance with the respective characteristics of the article to be plated and said probe.

FIG. 1

PLATING CURRENT SUPPLY UNIT

FIG. 2

0090407

FIG. 3

European Patent Office

EUROPEAN SEARCH REPORT

| | DOCUMENTS CONSIDERED TO BE RELEVANT | | EP 83103090.3 |

| Category | Citation of document with indication, where appropriate, of relevant passages | Relevant to claim | CLASSIFICATION OF THE APPLICATION (Int. Cl. ³) |
|---|---|---|---|
| X | DE - A1 - 2 219 622 (PHILIPS)  <br> * Page 3, Line 9 - page 4, line 20; claims * <br> -- | 1,13-16 | G 01 B  7/06 |
| A | DE - A2 - 2 412 648 (SIEMENS) <br> * Totality * <br> ---- | | |

TECHNICAL FIELDS SEARCHED (Int. Cl. ³)

G 01 B  7/00

The present search report has been drawn up for all claims

| Place of search | Date of completion of the search | Examiner |
|---|---|---|
| VIENNA | 14-07-1983 | TOMASELLI |